# EUROPEAN PATENT APPLICATION

(11) **EP 4 564 551 A1**
(43) Date of publication of application: **04.06.2025**
(21) Application number: 24196808.0
(22) Date of filing: 27.08.2024
(51) Int. Cl.: H01M 50/204, H01M 50/367, H01M 50/383, H01M 50/30

(54) **ENERGY STORAGE SYSTEM**

(30) Priority: 28.11.2023 KR 20230167800
(71) Applicant: SAMSUNG SDI CO., LTD., Giheung-gu Yongin-si, Gyeonggi-do 17084 (KR)
(72) Inventor: KIM, Jintaek, 16678 Suwon-si (KR)
(74) Representative: Marks & Clerk LLP

(57) **Abstract**

An energy storage system configured to lower an internal pressure of a container and prevent an exposure of a flame to the outside when a battery fire occurs. The energy storage system includes a battery rack in which at least one battermodule is accommodated, a container in which the battery rack is accommodated, a duct in the container, and a flame blocking portion in an opening of the duct and configured to block a flame generated inside the container from being exposed to an outside of the container through the duct.

## Description

### BACKGROUND

### 1. Field

Aspects of embodiments of the present disclosure relate to an energy storage system.

### 2. Discussion of Related Art

Generally, as the demand for portable electronic products such as laptop computers, video cameras, portable phones, and the like increases rapidly and the commercialization of robots, electric vehicles, and the like begins in earnest, research is actively underway on high-performance secondary batteries capable of being repeatedly charged and discharged.

Such secondary batteries are widely used for driving or energy storage not only in small devices, such as portable electronic devices, but also in medium-to-large devices, such as electric vehicles or energy storage systems (ESSs).

In the case of an ESS in which two or more battery modules are sealed using a container, the container may be damaged due to an increase in internal pressure of the container when a battery fire occurs. Additionally, when a flame is exposed to the outside of the container, the fire can spread to surrounding areas.

The above-described information disclosed in the technology that forms the background of the present disclosure is only intended to improve understanding of the background of the present disclosure, and thus may include information that does not constitute the related art.

### SUMMARY

An aspect of embodiments of the present disclosure is directed to providing an energy storage system configured to lower an internal pressure of a container and preventing an exposure of a flame when a battery fire occurs.

These and other aspects and features of the present disclosure will be described in or will be apparent from the following description of some embodiments of the present disclosure.

According to an aspect of the present disclosure, an energy storage system includes a battery rack in which at least one battery module is accommodated, a container in which the battery rack is accommodated, a duct in the container, and a flame blocking portion in an opening of the duct and configured to block a flame generated inside the container from being exposed to an outside of the container through the duct.

According to an aspect of the present disclosure, an energy storage system comprises: a battery rack in which a battery module is stored; a container in which the battery rack is accommodated; a duct provided in the container; and a flame blocking portion disposed in an opening of the duct and configured to block a flame generated inside the container from being exposed to an outside of the container through the duct.

In either aspect the flame blocking portion may include two or more flame blocking portions spaced apart from each other in an extension direction of the duct.

The flame blocking portion may include two or more filter members stacked in an extension direction of the duct.

The filter member may have a mesh structure.

The filter member may include first filter members spaced apart from each other, and second filter members between the first filter members and having air gaps of different sizes than the first filter members.

The flame blocking portion may further include a support member stacked on the filter member and supporting the filter member.

The support member may include a first support member on a first surface of the filter member, and a second support member on a second surface of the filter member.

The flame blocking portion may be detachably coupled to the duct.

A slot, in which the flame blocking portion is seated, may be provided in the duct.

The energy storage system may further include a cover coupled to the duct and covering the opening of the duct.

A gap, through which gas inside the container is discharged, may be between the cover and the duct.

The energy storage system may further include a pressure reducing member in the opening of the duct and configured to prevent an internal pressure of the container from increasing to a set pressure or greater.

The pressure reducing member may have a louver structure.

The pressure reducing member may include a first pressure reducing member configured to guide a direction of airflow moving through the duct to be a first direction, and a second pressure reducing member stacked on the first pressure reducing member that is configured to guide a direction of airflow passing through the first pressure reducing member to be a second direction different than the first direction.

The energy storage system may further include a flame direction changing member between the battery rack and the duct and configured to redirect a direction of the flame.

The flame direction changing member may include a flame blocking plate between the battery rack and the duct and spaced apart from the duct, a protrusion at an edge of the flame blocking plate and protruding toward a location of the duct, and a guide path between the flame blocking plate and the duct and configured to guide movement of the flame.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

The above and other objects, features and advantages of the present disclosure will become more apparent to those of ordinary skill in the art by describing embodiments thereof in detail, purely by way of example, with reference to the accompanying drawings, in which:
FIG. 1 is a cross-sectional view schematically illustrating an energy storage system according to a first embodiment of the present disclosure;
FIG. 2 is a cross-sectional view schematically illustrating flame blocking portions installed in a stacked manner in a duct in the energy storage system according to the first embodiment of the present disclosure;
FIG. 3 is a cross-sectional view schematically illustrating a state in which the flame blocking portions are to be seated in slots formed in the duct in the energy storage device according to the first embodiment of the present disclosure;
FIG. 4 is an exploded perspective view schematically illustrating the flame blocking portion in the energy storage system according to the first embodiment of the present disclosure;
FIG. 5 is a cross-sectional view schematically illustrating a cover coupled to a duct in an energy storage system according to a second embodiment of the present disclosure;
FIG. 6 is a cross-sectional view schematically illustrating a pressure reducing member installed in a duct in an energy storage system according to a third embodiment of the present disclosure;
FIGS. 7 and 8 are cross-sectional views schematically illustrating pressure reducing members installed in ducts in energy storage systems according to fourth and fifth embodiments of the present disclosure; and
FIG. 9 is a cross-sectional view schematically illustrating a flame direction changing member in an energy storage system according to a sixth embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

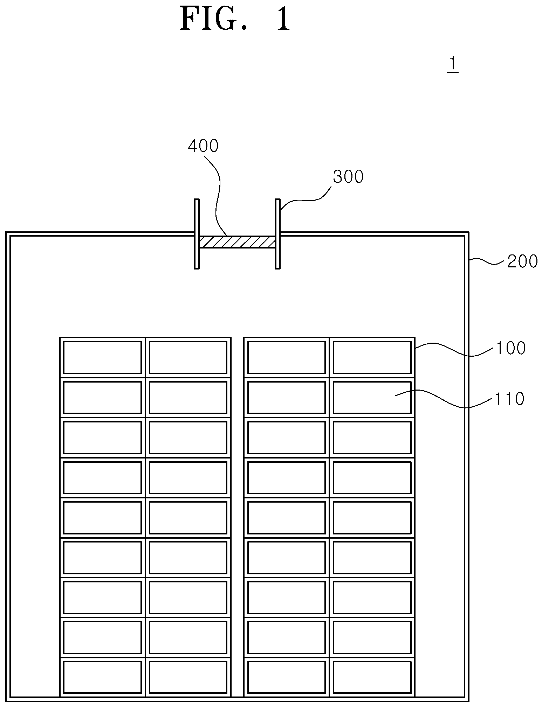

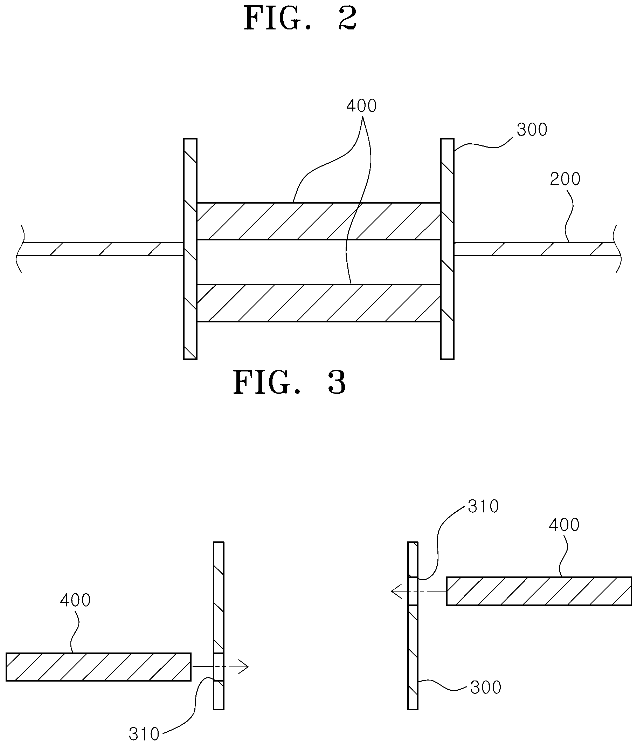

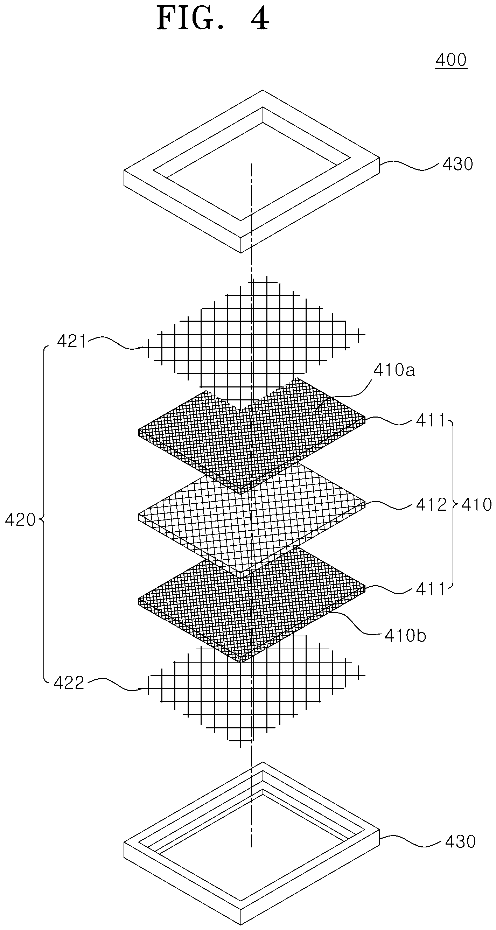

FIG. 1 is a cross-sectional view schematically illustrating an energy storage system according to a first embodiment of the present disclosure, FIG. 2 is a cross-sectional view schematically illustrating flame blocking portions installed in a stacked manner in a duct in the energy storage system according to the first embodiment of the present disclosure, FIG. 3 is a cross-sectional view schematically illustrating a state in which the flame blocking portions are seated in slots in the duct in the energy storage device according to the first embodiment of the present disclosure, and FIG. 4 is an exploded perspective view schematically illustrating the flame blocking portion in the energy storage system according to the first embodiment of the present disclosure.

Referring to FIGS. 1 to 4, an energy storage system 1 according to the first embodiment of the present disclosure includes a battery rack 100, a container 200 accommodating the battery rack 100, a duct 300 in the container 200, and a flame blocking portion 400 in the duct 300.

The battery rack 100 is an energy source of the energy storage system 1 according to the first embodiment of the present disclosure and may include one or more battery racks 100.

A battery module 110 is accommodated in the battery rack 100. The battery rack 100 includes at least a plurality of battery modules 110 arranged in a vertical direction. The battery module 110 may include a plurality of battery modules 110 stacked in a height direction of the battery rack 100.

In the present embodiment, the battery module 110 includes one or more battery cells. The battery cells include a plurality of battery cells which are electrically connected to each other. In an embodiment, the or each battery cell may be a lithium ion battery. In one or more embodiments, the battery cell is a secondary battery and may be a pouch-type secondary battery, a cylindrical secondary battery, or a prismatic secondary battery.

The container 200 accommodates the battery rack 100 therein. The container 200 may have the shape of a box with an internal space therein. The container 200 may cover and seal the one or more battery racks 100 in an air-tight manner.

The container 200 may be configured to withstand fire or explosion pressure in a dangerous situation such as a fire due to an abnormality of the battery module 110 stored in the battery rack 100, an explosion of the battery module 110, or the like. In one or more embodiments, the container 200 may include a steel plate material configured to withstand an explosion pressure or the like.

The duct 300 is provided in the container 200. The duct 300 may be located at an upper side of the container 200. The duct 300 may pass through an upper surface of the container 200 and extend in a vertical direction of the container 200.

A slot 310 (see FIG. 3), in which the flame blocking portion 400 is seated, may be provided in the duct 300. The slot 310 may pass through the duct 300 so that the flame blocking portion 400 is slidably inserted into the duct 300. The slot 310 may extend in a width direction of the duct 300. The slot 310 may include a plurality of slots 310 which are spaced apart from each other in an extension direction (e.g., a vertical direction) of the duct 300.

The flame blocking portion 400 is installed in an opening of the duct 300. The flame blocking portion 400 is configured to block a flame generated inside the container 200 (e.g., due to a fire in the battery module 110) from being exposed to the outside of the container 200 through the duct 300. In an embodiment, the flame blocking portion 400 may include a plurality of flame blocking portions 400 which are spaced apart from each other in the extension direction (e.g. the vertical direction) of the duct 300. The flame blocking portion 400 may be detachably coupled to the duct 300.

The flame blocking portion 400 may include a plurality of filter members 410. The filter members 410 may be stacked in the extension direction (e.g., the vertical direction) of the duct 300. The or each filter member 410 may have a mesh structure. The filter member 410 may include a copper (cu) or stainless steel (sus) material configured to cool the flame. The filter member 410 may include a first filter member 411 and a second filter member 412. The first filter member 411 may be a pair of first filter members 411 spaced apart from each other in the extension direction (e.g., the vertical direction) of the duct 300. In one or more embodiments, the first filter member 411 may have a structure of about (approximately) 30 mesh, i.e. with 30 holes per inch, the holes typically having a width not exceeding 0.595mm.

The first filter member 411 may include a plurality of unit filter members. In an embodiment, in the first filter member 411, two unit filter members may be stacked.

The second filter member 412 is between the pair of first filter members 411. The second filter member 412 may include air gaps of a different size from the first filter member 411 (e.g., the first and second filter members 411, 412 may have different mesh sizes). In an embodiment, the second filter member 412 may have a structure of about (approximately) 10 mesh, i.e. with 10 holes per inch, the holes typically having a width not exceeding 2mm. The second filter member 412 may include a plurality of unit filter members. In one or more embodiments, in the second filter member 412, twenty-four (24) unit filter members may be stacked.

The flame blocking portion 400 may further include a support member 420. The support member 420 may be stacked on the plurality of filter members 410 that are stacked.

The support member 420 may have a lattice shape. The support member 420 may be configured to support the filter member 410 and protect the filter member 410.

The support member 420 may include a first support member 421 and a second support member 422. The first support member 421 may be on a first surface 410a of the filter member 410. The first surface 410a may be an outer surface of the first filter member 411 of the pair of first filter members 411 that faces the outside of the container 200. The second support member 422 may be on a second surface 410b of the filter member 410. The second surface 410b may be an outer surface of the first filter member 411 of the pair of first filter members 411 that faces the inside of the container 200 (e.g., the first and second support members 421, 422 may be on opposite sides of the filter member 410).

The flame blocking portion 400 may further include a pair of frames 430 that are seated on the first support member 421 and the second support member 422 and are coupled to each other. The frames 430 may be formed in the shape of a framework with an open central portion (e.g., a picture frame configuration). The pair of frames 430 may be coupled to each other by fastening members, such as bolts or the like, and may be in contact with an edge of the first support member 421 and an edge of the second support member 422.

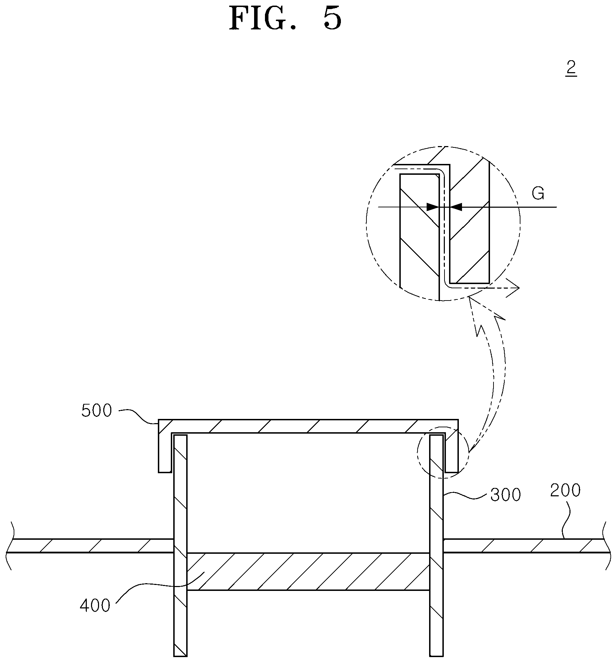

FIG. 5 is a cross-sectional view schematically illustrating a cover coupled to a duct in an energy storage system according to a second embodiment of the present disclosure.

Referring to FIG. 5, an energy storage system 2 according to the second embodiment of the present disclosure may include a battery rack 100 (as shown in FIG. 1), a container 200, a duct 300, a flame blocking portion 400, and a cover 500.

In describing the energy storage system 2 according to the second embodiment of the present disclosure, only the cover 500 that was not described in the energy storage system 1 according to the first embodiment of the present disclosure will be described.

The description of the energy storage system 1 according to the first embodiment of the present disclosure may be directly applied to the remaining components of the energy storage system 2 according to the second embodiment of the present disclosure.

The cover 500 may be coupled to the duct 300 and cover the opening of the duct 300. The cover 500 may be located outside of the container 200. The cover 500 may overhang and/or overlap a portion of the sidewall of the duct 300. The cover 500 may be configured to prevent external foreign substances, such as moisture and the like, from being introduced into the container 200 through the duct 300.

A gap G through which gas inside the container 200 is discharged may be formed between the cover 500 and the duct 300. Fire gas that is generated inside the container 200 and passes through the flame blocking portion 400 may be discharged to the outside of the container 200 through the gap G.

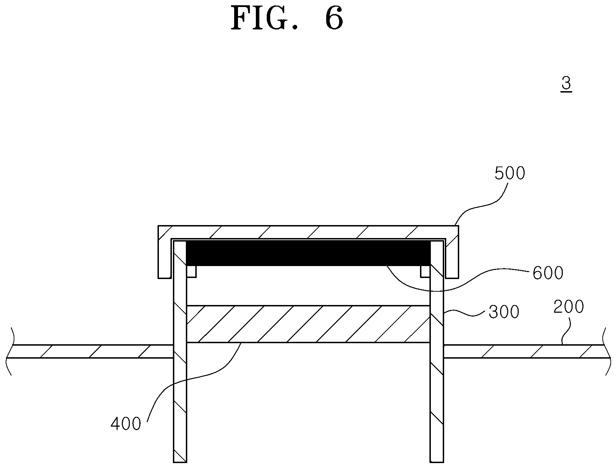

FIG. 6 is a cross-sectional view schematically illustrating a pressure reducing member installed in a duct in an energy storage system according to a third embodiment of the present disclosure.

Referring to FIG. 6, an energy storage system 3 according to the third embodiment of the present disclosure may include a battery rack 100 (as shown in FIG. 1), a container 200, a duct 300, a flame blocking portion 400, a cover 500, and a pressure reducing member 600.

In describing the energy storage system 3 according to the third embodiment of the present disclosure, only the pressure reducing member 600 that was not described in the energy storage system 1 according to the first embodiment of the present disclosure or the energy storage system 2 according to the second embodiment of the present disclosure will be described.

The description of the energy storage system 1 according to the first embodiment of the present disclosure or the energy storage system 2 according to the second embodiment of the present disclosure may be directly applied to the remaining components of the energy storage system 3 according to the third embodiment of the present disclosure.

The pressure reducing member 600 may be installed in the opening of the duct 300. The pressure reducing member 600 may be configured to allow gas inside the container 200 to be discharged to the outside of the container 200 and to prevent (or at least mitigate) an internal pressure of the container 200 from increasing to a set pressure or greater. The pressure reducing member 600 may include a relief panel, a deflagration panel, a relief valve, etc. The pressure reducing member 600 may be located above the flame blocking portion 400 and may face the outside of the container 200.

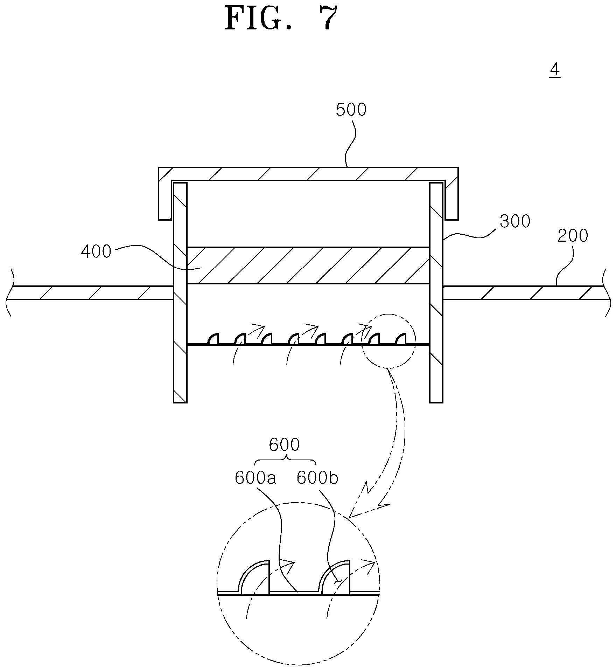

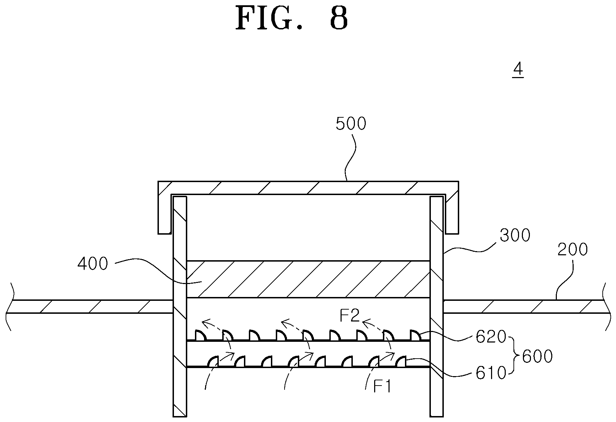

FIGS. 7 and 8 are cross-sectional views schematically illustrating a pressure reducing member installed in a duct in an energy storage system according to a fourth and a fifth embodiment of the present disclosure.

Referring to FIG. 7 and similarly to FIG. 8, each figure shows an energy storage system 4 that may include a battery rack 100 (as shown in FIG. 1), a container 200, a duct 300, a flame blocking portion 400, a cover 500, and a pressure reducing member 600.

The energy storage system 4 according to the fourth and fifth embodiments of the present disclosure may be configured to differ only in the detailed configuration of the pressure reducing member 600 from the energy storage system 3 according to the third embodiment of the present disclosure.

In describing the energy storage system 4 according to the fourth and fifth embodiments of the present disclosure, only the detailed configuration of the pressure reducing member 600, which is different from that in the energy storage system 3 according to the third embodiment of the present disclosure will be described.

The description of the energy storage system 1 according to the first embodiment of the present disclosure or the energy storage system 2 according to the second embodiment of the present disclosure may be directly applied to the remaining components of the energy storage system 4 according to the fourth and fifth embodiments of the present disclosure.

The pressure reducing member 600 may have a louver structure. The pressure reducing member 600 having the louver structure may be located below the flame blocking portion 400 and may face the inside of the container 200. The pressure reducing member 600 may include at least one pressure reducing plate 600a (e.g., a plurality of pressure reducing plates 600a) in which at least one louver perforation 600b (e.g., a plurality of louver perforations 600b) is formed.

The pressure reducing member 600 may include a first pressure reducing member 610 and a second pressure reducing member 620, as illustrated in the fifth embodiment of FIG. 8. The first pressure reducing member 610 may be configured to guide a direction of airflow moving through the duct 300 to be a first direction F1 (e.g., to the right in FIG. 8). The first pressure reducing member 610 may be configured to guide the movement direction of the airflow so that the airflow does not move in the form of a straight line toward the flame blocking portion 400 but rather moves obliquely in the first direction F1. The second pressure reducing member 620 may be stacked on the first pressure reducing member 610 (e.g., the second pressure reducing member 620 may be above the first pressure reducing member 610 and spaced apart from the first pressure reducing member 610 by a gap). The second pressure reducing member 620 may be configured to guide the direction of the airflow passing through the first pressure reducing member 610 to be a second direction F2 (e.g., to the left in FIG. 8) that is different than the first direction F1. The second pressure reducing member 620 may be configured to guide the airflow to move obliquely in the second direction F2, which is a direction opposite to the first direction F1. Accordingly, the airflow passing through the first pressure reducing member 610 and the second pressure reducing member 620 may move in a zigzag shape.

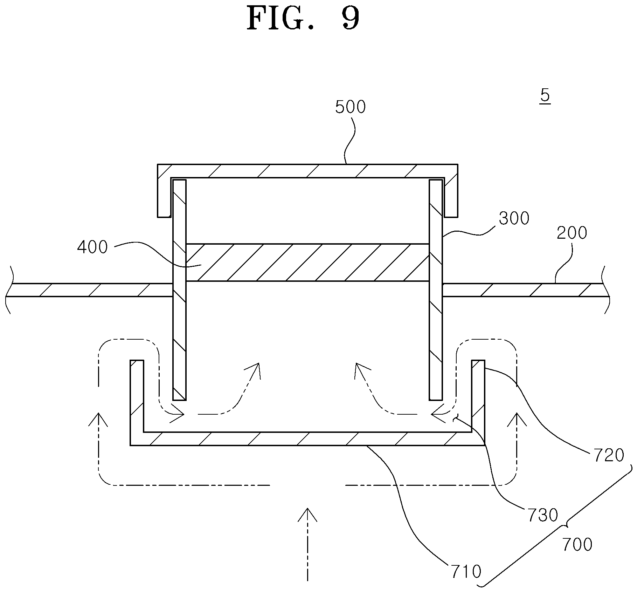

FIG. 9 is a cross-sectional view schematically illustrating a flame direction changing member in an energy storage system according to a sixth embodiment of the present disclosure.

Referring to FIG. 9, an energy storage system 5 according to the sixth embodiment of the present disclosure may include a battery rack 100 (as shown in FIG. 1), an external container 200, a duct 300, a flame blocking portion 400, a cover 500, and a flame direction changing member 700.

In describing the energy storage system 5 according to the sixth embodiment of the present disclosure, only the flame direction changing member 700 that was not described in the energy storage system 1 according to the first embodiment of the present disclosure or the energy storage system 2 according to the second embodiment of the present disclosure will be described.

The description of the energy storage system 1 according to the first embodiment of the present disclosure or the energy storage system 2 according to the second embodiment of the present disclosure may be directly applied to the remaining components of the energy storage system 5 according to the sixth embodiment of the present disclosure.

The flame direction changing member 700 may be installed between the battery rack 100 and the duct 300. The flame direction changing member 700 may be configured to change a direction of a flame so that the flame that moves toward the duct 300 is detoured (redirected). The flame direction changing member 700 may be configured to reduce a speed of the flame and to guide the cooling of the flame so that the high-speed flame is not directly introduced into the flame blocking portion 400.

In an embodiment, the flame direction changing member 700 may include a flame blocking plate 710, a protrusion 720 connected to the flame blocking plate 710, and a guide path 730.

The flame blocking plate 710 may be located between the battery rack 100 and the duct 300. The flame blocking plate 710 may be spaced apart from the duct 300. The flame blocking plate 710 may have a flat plate shape (e.g., a disc shape) and may be configured to block an opening between the battery rack 100 and the duct 300.

The protrusion 720 may be provided at an edge of the flame blocking plate 710. The protrusion 720 may be formed integrally with the flame blocking plate 710. The protrusion 720 may protrude upward from the flame blocking plate 710 at a set height in a direction along which the duct 300 extends. The protrusion 720 may be spaced apart from the duct 300 and may extend in a circumferential direction of the flame blocking plate 710 and surround the circumference of at least a lower portion of the duct 300.

The guide path 730 is formed between the flame blocking plate 710, the protrusion 720, and the duct 300. The guide path 730 may be configured to guide the movement of the flame.

The direction of the flame blocked by the flame blocking plate 710 is changed (redirected) to a direction toward the edge of the flame blocking plate 710 at which the protrusion 720 is located, and the direction of the flame blocked by the protrusion 720 is changed (redirected) so that the flame moves through a gap between the duct 300 and the protrusion 720, and then the flame is introduced into the duct 300.

According to the present disclosure, in response to a battery fire occurring in a container, a flame blocking portion installed in a duct can block (or at least mitigate) a flame generated inside the container from being exposed to the outside of the container through the duct.

According to the present disclosure, it is possible to suppress a rapid increase in pressure inside a container using a pressure reducing member installed in a duct to prevent damage to the container.

According to the present disclosure, since it is possible to allow a flame to be detoured (redirected) so that a high-speed flame is not directly introduced into a flame blocking portion, a speed of a flame can be reduced, and cooling of the flame can be achieved.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. An energy storage system comprising:
a battery rack comprising at least one battery module;
a container accommodating the battery rack;
a duct in the container; and
a flame blocking portion in an opening of the duct, the flame blocking portion being configured to block a flame generated inside the container from being exposed to an outside of the container through the duct.

2. The energy storage system as claimed in claim 1, wherein the flame blocking portion comprises a plurality of flame blocking portions spaced apart from each other in an extension direction of the duct.

3. The energy storage system as claimed in claim 1 or claim 2, wherein the flame blocking portion comprises a plurality of filter members stacked in an extension direction of the duct.

4. The energy storage system as claimed in claim 3, wherein each of the plurality of filter members has a mesh structure.

5. The energy storage system as claimed in claim 4, wherein the plurality of filter members comprises:
first filter members spaced apart from each other; and
second filter members between the first filter members, each of the second filter members having air gaps of different sizes from the first filter members.

6. The energy storage system as claimed in any one of claims 3 to 5,
wherein the flame blocking portion further comprises a support member stacked on the plurality of filter members and supporting the plurality of filter members.

7. The energy storage system as claimed in claim 6, wherein the support member comprises:
a first support member on a first surface of the filter member; and
a second support member on a second surface of the filter member.

8. The energy storage system as claimed in any one of the preceding claims, wherein the flame blocking portion is detachably coupled to the duct.

9. The energy storage system as claimed in claim 8, further comprising a slot in the duct, wherein the flame blocking portion is seated in the slot.

10. The energy storage system as claimed in any one of the preceding claims, further comprising a cover coupled to the duct and covering the opening of the duct.

11. The energy storage system as claimed in claim 10, further comprising a gap between the cover and the duct, wherein gas inside the container is discharged through the gap.

12. The energy storage system as claimed in any one of the preceding claims, further comprising a pressure reducing member in the opening of the duct, the pressure reducing member being configured to prevent an internal pressure of the container from increasing to a set pressure or greater.

13. The energy storage system as claimed in claim 12, wherein the pressure reducing member comprises:
a first pressure reducing member configured to guide a direction of airflow moving through the duct to be a first direction; and
a second pressure reducing member stacked on the first pressure reducing member, the second pressure reducing member being configured to guide a direction of airflow passing through the first pressure reducing member to be a second direction different than the first direction.

14. The energy storage system as claimed in any one of the preceding claims, further comprising a flame direction changing member between the battery rack and the duct, the flame direction changing member being configured to redirect a direction of the flame.

15. The energy storage system as claimed in claim 14, wherein the flame direction changing member comprises:
a flame blocking plate between the battery rack and the duct and spaced apart from the duct;
a protrusion at an edge of the flame blocking plate and protruding toward the duct; and
a guide path between the flame blocking plate and the duct and configured to guide movement of the flame.
